# EUROPEAN PATENT SPECIFICATION

(11) **EP 0 430 932 B1**
(45) Date of publication and mention of the grant of the patent: **08.12.1993**
(21) Application number: 87904635.7
(22) Date of filing: 29.06.1987
(51) Int. Cl.: B65D 83/00, B65D 25/52, B65G 65/46

(54) **A DISCHARGE APPARATUS**
ENTLADUNGSVORRICHTUNG
APPAREILLAGE DE DECHARGEMENT

(30) Priority: 02.07.1986 SE 8602936
(43) Date of publication of application: 12.06.1991
(73) Proprietor: FISHERIES MANAGEMENT AND SUPPLY CO AB, S-252 22 Helsingborg (SE)
(72) Inventor: JONASSON, Bertil, S-340 22 Eneryda (SE)
(86) International application number: SE8700306
(87) International publication number: WO8800164

(56) References cited:
- CH-A- 5 610 275
- CH-A- 5 650 474
- DE-A- 1 556 721
- GB-A- 1 147 117
- GB-A- 1 171 088
- GB-A- 1 353 750
- US-A- 2 279 613

## Description

The invention concerns an apparatus for the discharge and dosing of paste-like or vault-forming material, comprising a container for the material, a discharge screw disposed in connection with an opening in the container and an agitation or vault-demolition device including a rotary wheel whose plane of rotation is substantially parallel to the centre axis of the screw said wheel having at its periphery teeth meshing with the screw said wheel further having dogs projecting laterally from the wheel.

This art abounds in a multiplicity of different apparatuses for the discharge and dosing of intractible materials. In this context, the term intractible materials is taken to mean, on the one hand, paste-like materials which readily adhere to container walls, conduits and the like, and, on the other hand, such pulverulent and other materials as possess a manifest tendency to form arches or vaults if they are removed from beneath in a container. Materials which may be considered as extremely intractible in this context are such materials as, in addition to the above-outlined properties, also include sensitive parts or particles which under no circumstances are to be damaged, crushed or comminuted to smaller fragments during the handling of the material proper. A one example of a material to be handled by the inventive apparatus could be mentioned shrimp cheese paste.

GB-A- 1 353 750 discloses an apparatus of the type mentioned by way of introduction. This apparatus comprises a container having at the bottom thereof a discharge screw meshing with a toothed idler wheel having a plane of rotation substantially parallel with the axis of rotation of said screw. This wheel has a crank pin moving an agitator bar vertically towards and away from said screw. The agitator bar has a laterally projecting agitator finger or plate.

The apparatus according to this GB patent is designed for the discharge of pigments in the sup-micron particle range and does not work in connection with sticky, paste-like material. If tried on such a material the result would be the agitator bar and plate digging out cavities in the material thereby not contributing to the discharge of the material.

Also US-A- 2 279 613 discloses an apparatus of the kind mentioned above. This apparatus comprises two screws each of which meshing with a toothed wheel having laterally extending agitator lugs or pins.

The apparatus of this document is intended for the distribution of fertilizers and would not work if used for discharging a paste-like sticky product as such a product would form a body which would rotate as a solid body together with the pins.

DE-A- 21 65 230 discloses a similar apparatus intended for mixing and discharging metered quantities of material. This apparatus includes a container in which there is disposed an agitator which is formed as a rotary bar from which project, in approximately radial directions, a number of agitator fingers. Beneath the agitator, there are then disposed two discharge screws, in which the one screw is of greater diameter and larger pitch than the other. The concept according to this prior publication is that the agitator ensures a reliable supply of material to both of the discharge screws, in which the larger screw larger pitch than the other. The concept according to this prior publication is that the agitator ensure a reliable supply of material to both of the discharge screws, in which the larger screw discharges the major fraction of the material, whereat the smaller screw takes over and effects a carefully and accurately dosed final discharge.

The apparatus according to this patent specification is a good exponent of a technique which has proved not to function in practice. Thus, if this apparatus were used in, for example, the discharge of such a viscid material as shrimp cheese paste, there would rapidly be formed in the agitator a solid body of rotating cheese mass. In the same way, both of the discharge screws would probably also be choked, such that they formed approximately cylindrical, solid rotating bodies. It would hardly be possible to realise any advancement of a material of a paste-like, and viscid and adhesive consistency using an apparatus according to this prior art publication.

The object of the present invention is to realise an apparatus of the type disclosed by way of introduction, the apparatus being designed in such a manner that it may, in a controlled and operationally reliable manner, discharge and dosage dispsense even extremely intractible materials, for example such materials as include, in a viscid and paste-like basic mass, sensitive particles, small pieces or larger aggregates. The invention further has for its object to realise an apparatus of the type disclosed by way of introduction which is designed in such a manner as to permit complete emptying of the container even if the container is filled with an extremely intractible material. The invention has still further for its object to realise an apparatus of the type disclosed by way of introduction which may, in a strikingly efficient manner, even handle such pulverulent and other materials as show a manifest tendency to form arches or vaults on discharge. In addition, the present invention has for its object to realise such an apparatus as permits good cleaning or stripping of the discharge screw employed while in operation, and moreover to realise an arch or vault demolition or agitation device which permits free movements in the material and which runs no risk of becoming choked or forming a solid rotating body of the material. Finally, the present invention further has for its object to realise an apparatus which permits simple washing, in that parts employed within the container may easily be removed after operation.

The objects forming the basis of the present invention are attained if the apparatus intimated by way of introduction is characterised in that the agitation or vault demolition device includes a rotary wheel whose plane of rotation is approximately parallel to the centre of axis of the discharge screw; and that the wheel has a peripheral contour with recesses which are of a circumdistribution which is intended to accommodate at least parts of the thread crests of the screw.

According to the present invention, the apparatus is further suitably characterised in that the agitation or demolition device includes sweeper dogs projecting laterally from the wheel, these being placed and aligned in order, at least in the unloaded state on rotation of the wheel, to describe approximately cylindrical paths of movement about the axis of rotation of the wheel; and that the bottom of the container is of a form which geometrically follows these paths of movement.

As a result of this design of the vault-demolition or agitation device, there will be ensured, on the one hand, a vault demolition effect in a large volume of the material accommodated in the container, and, on the other hand, it will be ensured that the container, and even its lowermost region, may be substantially completely emptied, since the dogs sweep along, and thereby clean, the bottom surface of the container.

Further advantages will be attained according to the present invention if the apparatus is also characterised in that the recesses of the wheel are of a form which is approximately complementary to the thread profile of the screw; and that the wheel is provided, between two mutually subsequent recesses, with intermediate portions which are substantially complementary to portions of the circumferential surface of the screw disposed between the threads.

Because the wheel extends in this way down into the thread profile of the screw and engages therewith, it will be ensured, on the one hand, that no lumps of material rotating together with the screw will adhere to the screw as a solid body, and, on the other hand, that the corresponding phenomenon does not occur as regards the wheel and its sweeper dogs. The screw and the wheel will, hence mutually scrape each other clean, so that adequate engagement with the material will be achieved. Thus, during operation, the wheel will, in a highly advantageous manner, keep the discharge screw clean, such that its function can always be guaranteed.

Further advantages will be attained according to the present invention, if the invention is also given one or more of the characterising features as set forth in appended Claims 4 to 6.

The nature of the present invention and its aspects will be more readily understood from the following brief description of the accompanying Drawings, and discussion relating thereto.

In the accompanying Drawings:
Fig. 1 is a vertical section through the subject matter of the present invention, the section including the centre axis of the screw;
Fig. 2 is a vertical elevation, partly in cross-section, of the subject matter of the present invention, seen approximately at right angles to the longitudinal axis of the screw; and
Fig. 3 is a top plan view of the subject matter of the present invention.

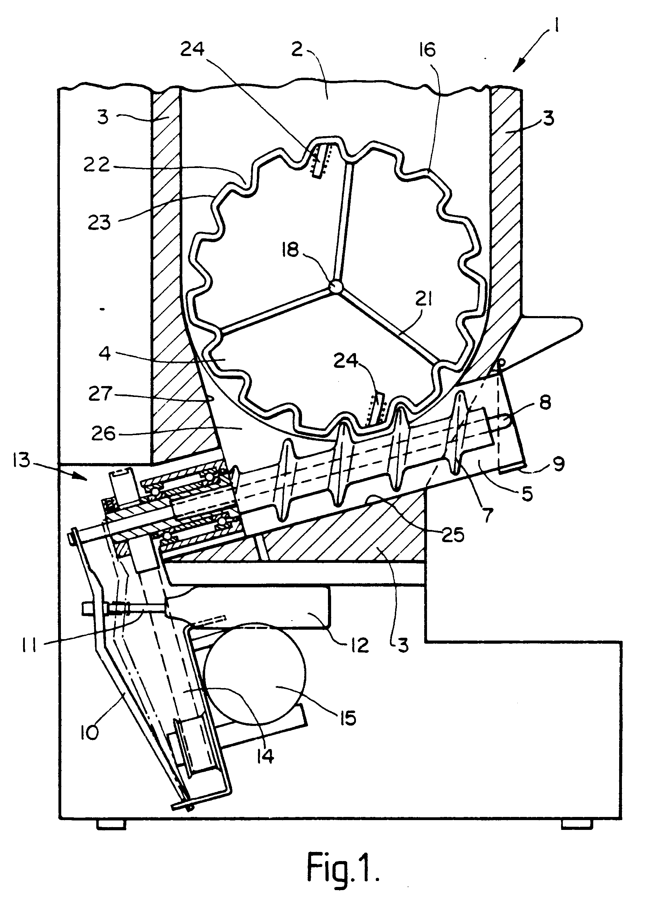

Referring to the Drawings, it will be apparent from Fig. 1 that the apparatus according to the invention comprises a container 1, which has an upper portion 2 which, in horizontal section, has a quadratic or rectangular cross-sectional configuration. Round, oval or other cross-sectional configurations may also be employed, even though certain practical limitations are placed, in such alternatives, on the design of the bottom of the container. The upper portion 2 may, in principle, be of any optional height and its horizontal cross-section may be constant or possibly diminishing in an upward direction. The container is further provided, in its wall, with an insulation 3 such that the material which is accommodated in the container may be kept at an intended temperature which differs from the ambient temperature. Thus, there may be provided, in the container, both heating means and cooling means. In such cases when the temperature of the material accommodated in the container is of no critical importance, the insulation 3 may, of course, be dispensed with and the container wall may consist of a single layer of sheet metal, plastic or the like.

The container is further provided with a bottom or lower portion 4 which is approximately of the form of a hemicylinder, in which the axis of the cylinder lies at right angles to the plane of the Drawing in Fig. 1.

Beneath the container 1, or in the lower region thereof, there is disposed a discharge channel 5 which is in communication with the lower portion 4 of the container by the intermediary of an opening in the lower, hemicylindrical wall of the container.

The discharge channel 5 accommodates a discharge screw 7 which is provided with a longitudinal bore for accommodating a rod 8 which is shiftable in its longitudinal direction for opening a closure lid 9 provided for closing the discharge channel 5. The lid 9 may, suitably but not necessarily, be stiffly spring-biased in a direction towards its closed position as shown in Fig. 1. As was mentioned above, the rod 8 extends through the screw 7, through a journalling member for driving the screw, and out towards the rear face of the subject matter of the present invention where it is interconnected with an operating arm 10 which is movable under the action of an operating rod 11 on an operating device 12. It will further be apparent from the Drawing that the discharge channel 5 inclines upwardly in the discharge direction, whereby the risk of spillage at the end of a discharge cycle is reduced. However, in certain cases, both horizontal and downwardly inclined channels 5 may be employed.

The screw 7 is connected, by the intermediary of a claw clutch (not shown), to its drive and journalling unit 13 which, in its turn, is connected to a drive motor 15 by the intermediary of a cogged belt transmission or some other suitable form of transmission.

Since the screw 7 will be urged in a direction to the left in Fig. 1 when it operates for discharging materials from the container 1, the screw need not be fixed in any way in the discharge channel 5 other than by being guided on the rod 8 or being positively guided by the inside face of the channel 5. As a result, the screw 7 may readily be dismounted when the hatch or lid 9 is opened, such that the screw may thereby easily be cleaned.

In the lower portion 4 of the container 1, there is provided an agitation or vault-demolition device which comprises a wheel 16 and sweep dogs 17 projecting laterally therefrom. The wheel is further provided with a shaft 18 which is parallel with or coincides with the centre axis of the lower, approximately hemicylindrical portion 4 of the container. The shaft 18 may be secured in opposing side walls of the container, for example in that it is provided with a spring-loaded telescopic section such that its effective length may be reduced, whereby the opposing end portions of the shaft may be inserted into journal sleeves 19, 20 recessed into the container wall. As a result of this construction, the entire agitation or vault demolition device may readily be lifted out as a unit from the container 1 and be remounted in place. Thus, no opening in the inner wall of the container or through-passage through the insulation 3 and the outer wall need be provided, whereby washing of the container is facilitated. However, in certain cases it is conceivable that the shaft 18 be passed through the container wall and possibly be connected to drive means disposed outside the container.

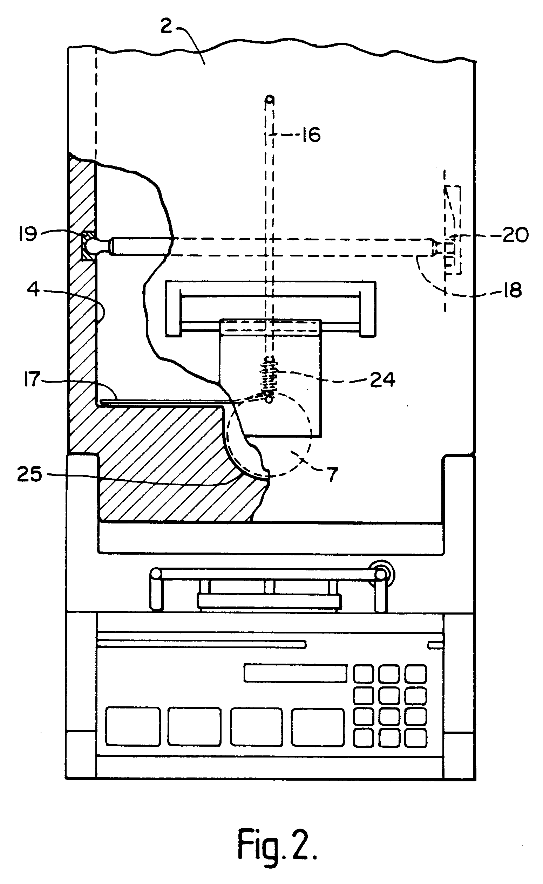

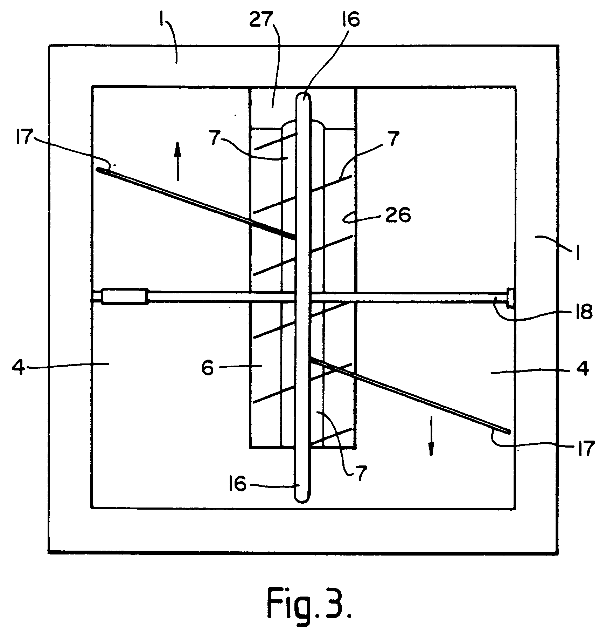

The wheel 16 is of open construction, which permits passage of the material through the wheel, from one side to the other, in directions approximately parallel to the longitudinal direction of the shaft 18, the wheel being composed of a peripheral annulus of heavy-duty wire material, the annulus being connected by the intermediary of spokes 21 to the shaft 18. The peripheral annulus may be considered as planar, as is apparent from both Fig. 2 and Fig. 3 and has, viewed from the side (according to Fig. 1) a number of recesses or depressions 22 whose circumdistribution corresponds to the pitch of the screw 7. Suitably, these recesses 22 are designed in such a manner that they are complementary, with slight play, to the profile of the screw thread. The recesses 22 are interconnected to each other by the peripheral annulus via intermediate portions 23 which may be designed to coincide with the peripheral circle of the wheel, but which may also be substantially straight so that, thereby, the wheel more closely approximates the configuration of a regular polygon. The intermediate portions 23 are formed in such a manner as to mate with the circumferential surface of the screw 7 in the valley between two adjacent threads on the screw. The size of the play between the contour of the screw and the peripheral annulus of the wheel 16 may vary from case to case, often depending upon the type of discharged material, and may be of the order of magnitude of from a few fractions of a millimetre to several millimetres and, in certain cases, centimetres. Naturally, considerably larger dimensions may also be selected if the apparatus is built on a correspondingly larger scale, for example in giant silos or the like. It may generally be said of the wheel that it has a peripheral configuration for such cooperation with the screw 7 that it may function as a doctor blade or stripper device for the screw and possibly be driven by the screw itself, or conversely, transmit driving forces to the screw.

As an alternative to the wheel 16 composed of heavy-gauge wire material, a plate-formed wheel of disk material, for example sheet metal, is conceivable. Naturally, the design of the periphery of the wheel with the recesses 22 and the intermediate portions 23 will be retained as that described above. The sweeper dog and its anchorage device (which will be described in greater detail below) are disposed, in this embodiment, in apertures in the wheel proximal to its periphery.

In the alternative using a wheel of sheet metal or disk material, the wheel may, naturally, be solid as was intimated above in certain embodiments, but as a rule it is to be preferred that even such a wheel be provided with one or more apertures disposed in the wheel plate so as to permit material in the container 1 to pass through the wheel.

Irrespective of the rest of the design of the wheel 16, it is possible to provide the periphery of the wheel with a scraper or doctor blade element of deformable or resiliently yieldable material which cooperates with the screw 7 for cleaning the screw.

On rotation of the screw 7, this will engage with the wheel 16 approximately as a worm gear, so that thereby the wheel 16 will also be set in rotation. Because of the close contact, or at least the proximity, between the circumferential surface of the screw and the peripheral annulus of the wheel, the occurrence of a solid body of material adhering to the screw and rotating therewith will be prevented, since such a body will, as has been intimated above, enter into engagement with the peripheral annulus of the wheel 16. Somewhat simplified, the peripheral annulus of the wheel acts as a scraper which keeps the surface of the screw 7 clean of adhering material. Conversely, it could also be said that the screw 7 functions as a cleaning device which prevents the wheel 16 from building up a solid rotating body of material about its periphery.

As was intimated above, the wheel is provided with a number - suitably two or more - of laterally projecting dogs 17 which may be formed as projecting resilient wires or flagella, planar scraper blades or the like. The dogs 17 are yieldably anchored in the wheel in that they are provided with helicoid spring mounts which accommodate pins 24 which are secured interiorly on the peripheral annulus of the wheel. The pins 24 may be considered as pivotal axes about which the dogs 17 may be pivoted in the event of extreme loading. In the normal position, as will be apparent from Fig. 3, the dogs are slightly advanced in the direction of movement, such that their outer, free ends lead in the direction of movement, while their inner ends anchored in the wheel trail behind. The consequence of this will be that, when the container 1 begins to empty, the dogs will move the material inwardly towards the wheel as they sweep closely along the bottom surface of the container.

No matter whether the bottom of the container 1 is hemicylindrical or is of any other configuration to be disclosed in greater detail below, the dogs 17 are designed to follow, as closely as possible, the profile of the bottom, at least in the region beneath the shaft 18 of the wheel 16, if the bottom is not rotationally symmetrical about the shaft.

The pins 24 are directed inwardly towards the centre of the wheel and lie in the plane of the peripheral annulus or the wheel 16. On the other hand, the pins are not radially directed, but are directed obliquely forwardly in the direction of movement, such that they make an acute angle with a radius through their anchorage in the peripheral direction. As a result, the advantage will be afforded that when the dogs are reflexed rearwardly in relation to the direction of movement on extreme loading, these will be deflected away from the cylindrical surface in the bottom portion 4 of the container 1, in other words the outer, free ends of the dogs 17 will describe a circular path of lesser diameter than would be the case when they move in the unloaded or non-reflexed state. Naturally, the pins 24 may also be approximately radial or refused in the rearward direction.

The discharge channel 5, which accommodates the screw 7, may suitably be provided with an approximately hemicylindrical lower wall portion 25 and approximately parallel, vertical upper wall portions 26, so that it essentially corresponds to the periphery of the screw along at least a portion of the extent thereof. Furthermore, the discharge channel 5 is provided with a rear wall 27 which, on the one hand, is at right angles to the longitudinal axis of the screw 7 and, on the other hand, is directed so as to constitute a tangent to the lower hemicylindrical portion 4 of the container 1. That aperture which places the interior of the container 1 in communication with the discharge channel 5 proper will, thus, at the inner end thereof, discharge at an elevated level, an insignificant distance below the level of the shaft 18. Since the discharge channel 5 inclines slightly upwardly and, at its outer end, mates with the periphery of the screw 7, the discharge channel will disect the substantially hemicylindrical lower portion 4 of the container at a low level which is approximately at a height which but insignificantly exceeds the height of the thread profile above the lowermost point of the container. As a result, the thread profile of the screw 7 will lie substantially freely exposed interiorly within the lower, hemicylindrical portion 4 of the container in the central region thereof, while being freely accessible from above via the inner portion of the discharge channel 5 proximal the rear wall 27.

According to the present invention, it is not necessary for the dogs to be provided, at their inner ends, with the above-discussed helicoidal springs. Instead, the dogs may be provided with a sleeve for accommodating the pin 24. However, this embodiment also includes the provision of a spring which pre-tensions the dogs forwardly in the direction of movement. Possibly, an abutment may be provided so that the dogs are prevented from being pivoted excessively in the forward direction, and so that they may also possess a certain inherent pre-tensioning even in their most advanced positions.

According to the present invention, it is also possible that the lower portion 4 of the container 1, described in the foregoing as being of hemicylindrical form, may be of another design such that it could instead be composed of two frusto-conical surfaces whose major diameter approximately coincides in both size and disposition with the wheel 16. In this case, the dogs 17 are also, naturally, designed in a corresponding manner, such that they sweep across these conical surfaces. In this embodiment, the bottom of the container, viewed according to Fig. 2, will be V-shaped with the nadir point at the screw 7. The nadir line in a V-shaped bottom may, naturally, also be approximately parallel to the shaft 18.

Further embodiments which are conceivable for the bottom 4 of the container are a) a V-shaped, or b) a hemispherical or cupolate design.

In the alternative of the V-shaped bottom, the valley of the V will lie with its longitudinal direction coinciding with the longitudinal direction of the screw 7. In such instance, the screw may lie completely free above the nadir valley of the V or be lowered intoan upwardly open channel of U-shaped or hemicylindrical crosssection. Also in this embodiment, the wheel 16 and the screw 7 engage with one another in the above-described manner.

No rotational symmetry about the shaft 18 of the wheel 16 will be attained in the V-shaped valley. Instead, the dogs 17 will approach the valley and possibly tangentially sweep the valley along a corridor straight beneath the shaft 18 of the wheel.

In the alternative with the hemispherical bottom, full rotational symmetry about the shaft 18 will be achieved. On the other hand, the situation regarding the agitators or dogs 17 will be as disclosed above for the V-shaped valley, if the bottom is cupolated and shallower than the hemisphere. If, on the other hand, the bottom is deeper than the hemisphere, the dogs or agitators will lie most proximal the bottom in two elongate corridors parallel to the shaft 18 and either side thereof, in other words at the beginning and end of the screw and at right angles to its longitudinal direction.

In particular in the embodiments with the V-shaped, hemispherical or cupolated bottom - but also in the hemicylindrical embodiment, the container may be round in cross-section.

Irrespective of the design of the bottom, for best discharge feeding capacity of the screw 7, the screw should be provided with more or less closely disposed surfaces, such as the discharge channel 5 which partly encloses the screw. In such cases where the discharge capacity of the screw is not of a critical nature and it may, possibly, be desirable to provide the screw with an agitative function, the screw may be wholly or partly exposed interiorly in the container and thus be as good as devoid of closely adjacent channel surfaces.

The present invention should not be considered as restricted to that described above and shown on the Drawings, many modifications being conceivable without departing from the scope of the appended Claims.

## Claims

1. An apparatus for the discharge and dosing of paste-like or vault-forming material, comprising a container (1) for the material, a discharge screw (7) disposed in connection with an opening in the container and an agitation or vault-demolition device (16, 17) including a rotary wheel whose plane of rotation is substantially parallel to the centre axis of the screw (7) said wheel having at its periphery teeth meshing with the screw said wheel further having dogs (17) projecting laterally from the wheel, **characterized in that**, the dogs (17) are in the form of wire or blade-like scraper elements which are resiliently anchored in the wheel (16) and are inclined such that, at least in the unloaded state, they have their outer ends advanced ahead of their inner ends in the direction of movement, whereby they are disposed to displace treated material laterally in towards the wheel (16) and the screw (7).

2. The apparatus as claimed in claim 1 further **characterized in that**, the bottom (4) of the container (1) is of a shape which mates the paths of movement of the dogs (17).

3. The apparatus as claimed in claim 1 or 2, **characterized in that** the container (1) is provided with an upper portion (2) which is at least of uniform thickness, but may possibly be upwardly tapering, and a lower, approximately hemcylindrical portion (4) whose centre axis approximately coincides with the shaft (18) of the wheel (16), and whose radius but insignificantly exceeds the radius of the wheel; **and that** the screw (7) is placed such that it extends, with its threads, through the opening of the container within the hemicylindrical portion (4), while acting, with its mesohelical circumferential surface, approximately tangentially therewith.

4. The apparatus as claimed in any one of claims 1-3, **characterized in that** the dogs (17) are pivotal about pins (24) which are secured on the wheel (16) at the periphery thereof and are directed, in the plane of rotation of the wheel, obliquealy in towards the centre of the wheel such that the outer ends of the dogs (17) are pivoted rearwardly and to positions of reduced diameter on their paths of movement when the dogs are pivoted under loading about the pins (24).

## Patentansprüche

1. Vorrichtung zu der Leerung und Dosierung von einem pastaförmigen und gewölbebildenden Material, enthaltend ein Behältnis (1) für das Material, eine Schraube (7) der Leerung die zusammenhängend mit einer Öffnung in dem Behältnis angeordnet ist und eine umrührende oder gewölbeabbrechende Einrichtung (16,17) einschliesslich ein rotierendes Rad deren Rotationsebene zu der Zentrumachse der Schraube (7) hauptsächlich parallel ist, wobei das erwähnte Rad an deren Peripherie Zähne hat, die mit der Schraube eingreifen, und dass das Rad weiter seitliche vorspringenden Mitnehmer (17) hat, dadurch **gekennzeichnet**, dass die Mitnehmer (17) in der Form von draht- oder blattförmigen Abkratzelementen sind, die in dem Rad (16) elastisch verankert und so geneigt sind, dass wenigstens in unbelastetem Zustand, ihre äusseren Enden über ihre inneren Enden in der Richtung der Bewegung vorspringen, wodurch sie so angeordnet sind, dass sie behandeltes Material seitlich in Richtung des Rades (16) und der Schraube (7) versetzen.

2. Die Vorrichtung nach Anspruch 1, dadurch **gekennzeichnet**, dass der Boden (4) des Behältnisses (1) eine Form hat, der sich an die Bewegungsbahn von den Mitnehmern (17) anschliesst.

3. Die Vorrichtung nach einem der Ansprüche 1 oder 2, dadurch **gekennzeichnet**, dass das Behältnis (1) mit einem oberen Teil (2) versehen ist, der wenigstens von gleichförmiger Dicke ist, der aber vielleicht aufwärts schmäler wird, und mit einem unteren, ungefähr halbzylindrischen Teil (4) deren Zentrumachse ungefähr mit der Achse (18) des Rades übereinstimmt; und dessen Radius nur unbedeutend das Radius des Rades übersteigt; und dass die Schraube (7) so placiert ist dass sie sich mit ihren Fäden durch die Öffnung des Behältnisses innerhalb des halbzylindrischen Teils (4) erstreckt, während sie, mit ihrer Mantelfläche zwischen den Fäden ungefähr dieses tangiert.

4. Die Vorrichtung nach einem der Ansprüche 1-3, dadurch **gekennzeichnet**, dass die Mitnehmer (17) schwenkbar um die Zapfen (24) sind, die an der Peripherie des Rades (16) befestigt sind und die in die Rotationsebene des Rades schräg gegen das Zentrum des Rades so gerichtet sind dass die äusseren Enden des Mitnehmers (17) zurückschwenken und zu Lagen mit vermindertem Durchmesser der Bewegungsbahnen kommen, wenn die Mitnehmer unter Belastung um die Zapfen (24) geschwenkt werden.

## Revendications

1. Appareil à décharger et à doser de la matière pâteuse ou en forme de voûtes, comportant un réservoir (1) de matière, une vis de déchargement (7) située en liaison avec une orifice du réservoir et un dispositif d'agitation ou de démolition de voûtes (16,17) comprenant une roue rotative dont le plan de rotation est sensiblement parallèle au centre de l'axe de la vis (7), laquelle roue étant munie à sa périphérie de dents qui collaborent avec ladite vis, laquelle vis étant par ailleurs munie d'entraîneurs (17) saillant latéralement de la roue, **caractérisé** par le fait que les entraîneurs (17) ont des éléments de racle en forme de fil ou de lame qui sont ancrés dans la roue (16) d'une manière élastique et inclinés de sorte qu'ils ont, au moins en position non-chargée, leurs extrémités extérieures en avant de leurs extrémités intérieures dans le sens du mouvement de sorte qu'ils sont aménagés à amener la matière traitée latéralement vers la roue (16) et la vis (7).

2. Appareil selon la revendication 1, **caractérisé** également par le fait que le fond (4) du réservoir (1) est d'une forme qui correspond aux trajectoires de mouvement des entraîneurs (17).

3. Appareil selon les revendications 1 ou 2, **caractérisé** par le fait que le réservoir (1) est muni d'une partie supérieure (2) étant au moins d'une épaisseur uniforme mais pouvant éventuellement rétrécir vers le haut, et d'une partie inférieure (4), sensiblement hémicylindrique dont le centre de l'axe est sensiblement confondu avec l'axe de rotation (18) de la roue (16), et dont le rayon ne dépasse que d'une manière insignifiante le rayon de la roue, et que la vis (7) est placée de sorte qu'elle s'étend avec ses filets par l'orifice du réservoir dans la partie hémicylindrique (4), en touchant sensiblement à ladite partie hémicylindrique avec sa surface de périphérie hélicoïdale.

4. Appareil selon les revendications 1-3, **caractérisé** par le fait que les entraîneurs (17) sont pivotants autour de pivots (24) qui sont liés à la périphérie de la roue (16) et sont dirigés, dans le plan de rotation de la roue, d'une manière oblique vers le centre de la roue de sorte que les extrémités extérieures des entraîneurs (17) sont pivotées vers l'arrière et à des positions de diamètre réduit dans leurs trajectoires de mouvement lorsque les entraîneurs sont pivotés sous chargement autour des pivots (24).
